# DEMANDE DE BREVET EUROPEEN

(11) **EP 4 163 570 A1**
(43) Date de publication de la demande: **12.04.2023**
(21) Numéro de dépôt: 22199367.8
(22) Date de dépôt: 03.10.2022
(51) Int. Cl.: F24S 40/52, F24S 50/80

(54) **VITRAGE THERMOSENSIBLE DE PRÉVENTION DES SURCHAUFFES POUR CAPTEUR SOLAIRE THERMIQUE PLAN**

(30) Priorité: 11.10.2021 FR 2110713
(71) Demandeur: COMMISSARIAT À L'ÉNERGIE ATOMIQUE ET AUX ÉNERGIES ALTERNATIVES, 75015 Paris (FR)
(72) Inventeur: CHEZE, David, 38054 GRENOBLE CEDEX 09 (FR); DUPOUY, Maxime, 73370 Le Bourget du Lac (FR)
(74) Mandataire: Brevalex

(57) **Abrégé**

Capteur solaire (2) thermique doté d'un vitrage (10) transparent en face avant du capteur, le vitrage (10) étant formé d'une superposition :
- d'une première couche (101) transparente,
- d'une deuxième couche (105) transparente,
- d'une couche (103) thermotrope agencée entre la première couche
(101) transparente et la deuxième couche (105) transparente et ayant une transmittance modulable du spectre visible et proche infrarouge, la couche (103) thermotrope contenant un polymère thermosensible tel qu'un d'hydrogel, en particulier de poly(N-isopropylacrylamide (PNIPAm), le polymère thermosensible ayant une température critique inférieure de transition (LCST) donnée comprise entre 30°C et 110°C, avantageusement entre 30°C et 75°C, de préférence entre 50°C et 70°C, et prévu de sorte que la couche thermotrope ait une transmittance maximale de 50% pour une température supérieure à cette température critique inférieure de transition (LCST) donnée.

## Description

### DOMAINE TECHNIQUE

La présente demande se rapporte au domaine des capteurs solaires thermiques plans et plus particulièrement à la mise en oeuvre d'un capteur solaire amélioré en termes de résistance et de durabilité tout en conservant un rendement de captation élevé.

### ÉTAT DE LA TECHNIQUE ANTÉRIEURE

On distingue principalement deux technologies de capteurs solaires thermiques : les capteurs solaires de type à tube sous vide et les capteurs solaires de type plan.

Un capteur solaire thermique plan est généralement doté d'un vitrage transparent dans le spectre solaire disposé au-dessus d'une cavité qui peut être remplie d'air et dans laquelle un absorbeur métallique est agencé. Cet absorbeur est accolé à un circuit de circulation de fluide tel que de l'eau glycolée.

Deux états de fonctionnement sont typiquement prévus : un premier dans lequel le fluide est mis en circulation dans le capteur est à une température afin de satisfaire un besoin thermique et un deuxième état dans lequel le fluide est maintenu en stagnation dans le capteur.

On cherche à maximiser le rendement de captation dans le premier état et dans le deuxième état, à minimiser la température à laquelle le fluide est soumis. Ainsi, on cherche typiquement à faire en sorte que cette température ne dépasse pas 150°C et avantageusement 110°C et de préférence 100°C dans des conditions extrêmes typiques, par exemple de l'ordre de 1000W/m² de rayonnement solaire incident et de 40°C de température extérieure afin de ne pas détériorer le capteur et de pouvoir maximiser sa durée de vie.

Plusieurs techniques existent pour limiter une surchauffe du capteur : la ventilation de l'enceinte du capteur, le déplacement de l'absorbeur, la mise en oeuvre d'un circuit fluidique formé de caloducs mobiles.

Une autre technique passive et non optique consiste à pousser le fluide dans une réserve ou d'intégrer un matériau à changement de phase (PCM pour « Phase Change Material ») afin de réaliser un tampon de chaleur. Une telle technique ne marche que pour des surchauffes modérées. En outre, une fois que le matériau PCM est entièrement liquéfié, la température à laquelle le fluide est susceptible d'être soumis recommence à monter.

Pour la prévention d'une surchauffe, le document DE 202005007474 prévoit d'intégrer une couche en matériau polymère maintenue en suspension entre l'absorbeur et le vitrage et dont les propriétés en termes de transmittance sont modulables de manière réversible en fonction de la température.

Un tel agencement nécessite un dispositif de maintien de la couche polymère. Un tel type d'agencement peut par ailleurs poser des problèmes d'encombrement d'autant qu'une telle couche peut avoir tendance à se détendre de manière importante.

Un autre dispositif présenté dans le document EP3596408 vise à limiter la surchauffe en accolant une couche dite « thermorégulée » à l'absorbeur en un matériau à base de pérovskite de cobaltites de terre rare ou de nickelate de terre rare. La mise en oeuvre d'une telle couche requiert l'utilisation d'un procédé de fabrication couteux. Par ailleurs, une telle couche a une efficacité limitée en termes de prévention d'une surchauffe.

Il se pose le problème de mettre en œuvre un nouveau capteur solaire amélioré en termes de résistance à la surchauffe tout en conservant un rendement de captation élevé.

### EXPOSÉ DE L'INVENTION

Selon un aspect, la présente invention prévoit un vitrage transparent pour capteur solaire formé d'une superposition :
- d'une première couche transparente, par exemple en verre ou en polycarbonate,
- d'une deuxième couche transparente,
- d'une couche thermotrope agencée entre la première couche transparente et la deuxième couche transparente et ayant une transmittance modulable du spectre visible et proche infrarouge, la couche thermotrope contenant un polymère thermosensible.

Le polymère thermosensible peut être en particulier un hydrogel.

Le polymère thermosensible est prévu avec une température critique inférieure de transition (LCST) donnée comprise entre 30°C et 110°C, avantageusement entre 30°C et 75°C, de préférence entre 50°C et 70°C, et prévu de sorte que la couche thermotrope ait une transmittance maximale de 50% pour une température supérieure à cette température critique inférieure de transition (LCST) donnée.

Pour des utilisations à haute température (i.e. >120°C) du capteur solaire, on prévoit par exemple un hydrogel à base de polyéthylène glycol.

Pour des utilisations à plus basse température, on prévoit avantageusement un hydrogel à base de poly(N-isopropylacrylamide (PNIPAm).

Avantageusement, la couche thermotrope contient un polymère thermosensible tel qu'un d'hydrogel de poly(N-isopropylacrylamide (PNIPAm), le polymère thermosensible ayant une température critique inférieure de transition (LCST) entre 30°C et 75°C, de préférence entre 50°C et 70°C, et prévu de sorte que la couche thermotrope ait une transmittance maximale de 25% pour une température supérieure à cette température critique inférieure de transition (LCST) donnée.

Selon un autre aspect, la présente invention concerne un capteur solaire thermique doté d'un vitrage transparent tel que défini plus haut en face avant du capteur.

Avantageusement, la couche thermotrope peut être sous forme d'une solution liquide, en particulier une solution aqueuse.

Selon un mode de réalisation particulier, la première couche transparente a une première épaisseur e₁, tandis que la deuxième couche transparente est prévue avec une deuxième épaisseur e₂ inférieure à la première épaisseur.

Selon une possibilité de mise en œuvre, la solution liquide peut comporter un additif antigel tel que du méthanol, ou du glycérol

La deuxième couche transparente peut être prévue par exemple en verre ou en polycarbonate. Avantageusement, la deuxième couche transparente est en matériau polymère.

Selon un autre aspect, la présente invention concerne un capteur solaire thermique doté d'un vitrage transparent tel que défini plus haut, ainsi que :
- un absorbeur, situé au moins en partie dans un volume interne refermé par le biais d'au moins une partie dudit vitrage, l'absorbeur étant configuré pour absorber le rayonnement solaire et le transformer en chaleur,
- au moins un tube collecteur, situé dans le volume interne de sorte que l'absorbeur se trouve entre ledit vitrage du capteur solaire et le tube collecteur, le tube collecteur comprenant un fluide caloporteur destiné à être réchauffé par le rayonnement solaire.

Selon un autre aspect, la présente invention concerne un procédé de fabrication d'un vitrage tel que défini plus haut.

Cette fabrication peut comporter des étapes consistant à :
a) disposer la première couche transparente et la deuxième couche transparente en regard l'une de l'autre,
b) réaliser une paroi de fermeture périphérique la première couche transparente et la deuxième couche transparente de sorte à définir une enceinte et préserver une ouverture latérale entre la première couche transparente et la deuxième couche transparente pour cette enceinte,
c) remplir l'enceinte à travers l'ouverture latérale d'une solution liquide à base d'un polymère thermosensible tel qu'un d'hydrogel, en particulier du poly(N-isopropylacrylamide (PNIPAm),
d) sceller l'enceinte en fermant l'ouverture latérale.

Avantageusement, l'étape b) de réalisation de la paroi de fermeture périphérique peut comprendre l'agencement d'une ou plusieurs cales entre la première couche transparente et la deuxième couche transparente, puis le dépôt d'une colle autour des cales et dans des espaces entre la première couche transparente et la deuxième couche transparente.

En variante, l'étape b) de réalisation de la paroi de fermeture périphérique peut comprendre le dépôt d'un élément adhésif liant des bords latéraux de la première couche transparente et de la deuxième couche transparente.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1 sert à illustrer un vitrage à transmittance modulable et muni d'une couche thermotrope liquide à base de polymère thermosensible intercalée entre deux vitres transparentes°;
La figure 2 sert à illustrer une molécule de PNIPAm susceptible d'être contenue dans une couche thermotrope liquide suivant l'invention°;
La figure 3 sert à illustrer les propriétés thermosensibles d'un polymère de type PNIPAm°;
La figure 4 sert à illustrer un capteur solaire muni du vitrage de la figure 1 pour une prévention de surchauffe ;
La figure 5 sert à illustrer un premier exemple de procédé de fabrication du vitrage de la figure 1 ;
La figure 6 sert à illustrer un deuxième exemple de procédé de fabrication du vitrage de la figure 1 ;
La figure 7 sert à illustrer un troisième exemple de procédé de fabrication du vitrage de la figure 1 ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

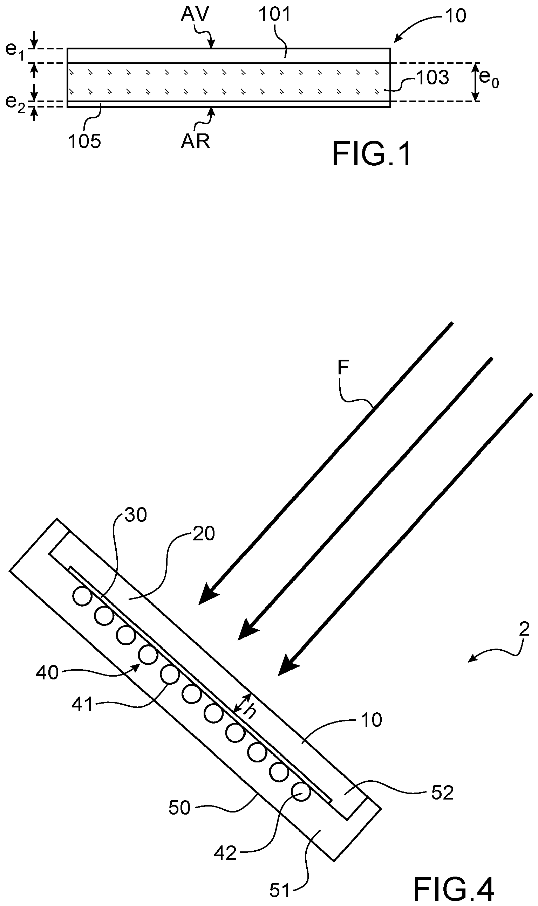

On se réfère à présent à la figure 1 sur lequel un vitrage transparent 10 tel que mis en oeuvre suivant un mode de réalisation de la présente invention est représenté de manière schématique.

Un tel vitrage est susceptible d'être intégré à un capteur solaire thermique plan. Le vitrage 10 est formé ici d'une première couche transparente 101 configurée pour laisser passer le rayonnement solaire et destinée à former la face avant AV du capteur solaire et d'une deuxième couche transparente 105, également configurée pour laisser passer le rayonnement solaire, la première couche transparente 101 et la deuxième couche transparente 105 étant superposées.

La première couche transparente 101 et la deuxième couche transparente 105 peuvent être réalisées par exemple en verre. La première couche transparente 101 est dotée d'une épaisseur e₁ de préférence prévue suffisante pour lui permettre d'assurer une protection mécanique et lui conférer une résistance aux chocs. Par exemple, l'épaisseur e₁ est comprise entre 2 et 5 mm, par exemple de l'ordre de 3 mm.

Avantageusement, la première couche transparente 101 est prévue avec une épaisseur e₁ supérieure à celle, e₂, de la deuxième couche transparente 105. La deuxième couche transparente 105 peut être prévue avec une épaisseur e₂ par exemple comprise entre 0.1 et 5 mm, par exemple de l'ordre de 1.5 mm.

Le vitrage 10 a ici la particularité d'être pourvu d'une couche thermotrope 103 de transmittance variable agencée entre la première couche transparente 101 et la deuxième couche transparente 105. La couche thermotrope 103 peut être prévue avec une épaisseur comprise par exemple entre 100 µm et 500 µm. Cette couche thermotrope 103 est sensible à la température et présente un changement, en particulier continu, de ses propriétés de transmittance du spectre visible et proche infrarouge en fonction de la température à laquelle elle est soumise. La couche thermotrope 103 est ainsi une couche encapsulée qui module sa transmission de l'énergie solaire en réponse à la température et est susceptible de passer d'un état dit « transparent » associé à une première valeur de transmittance à un autre état qualifié de «opaque » et associé à une deuxième valeur de transmittance plus faible que la première valeur de transmittance.

Pour cela, la couche thermotrope 103 est à base d'au moins un polymère thermosensible choisi en fonction de sa température de transition LCST (LCST pour : « lower critical solution temperature », soit « température de solution critique inférieure ») en dessous de laquelle la couche 103 a une transmittance élevée, et au-dessus de laquelle la couche 103 perd en transmittance et gagne en réflectance. La couche 103 peut être liquide en particulier sous forme d'un hydrogel dont les propriétés physiques sont modifiées en fonction de la température.

Un exemple particulier de composition de la couche 103 thermotrope est une solution aqueuse d'hydrogel à base de poly(N-isopropylacrylamide) (PNIPAm). Dans ce cas, on prévoit typiquement une concentration de PNIPAm entre 1 et 10% dans la solution.

En variante la couche thermotrope 103 liquide peut être réalisée au moyen d'un solvant aqueux et d'un co-solvant tel que par exemple le dioxane ou du méthanol. On veille de préférence à utiliser un solvant transparent ayant un indice de réfraction intermédiaire entre celui du verre (de l'ordre de 1,5) et celui de l'eau (de l'ordre de 1,3) et non-toxique et non-polluant, et qui soit peu absorbant dans le spectre solaire.

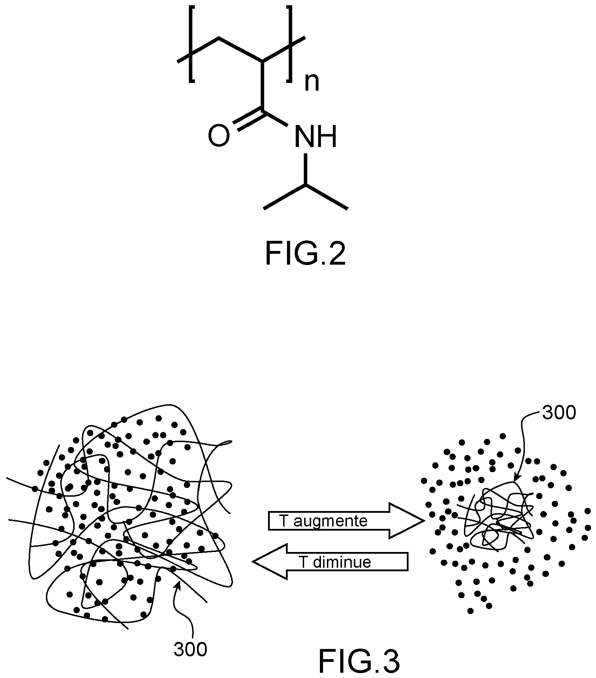

Comme le montre la formule en figure 2, le PNIPAm dispose de groupes hydrophiles (le groupe amide) et de groupes hydrophobes (la chaine carbonée et le groupe isopropyle). Lorsque la température augmente, les fonctions hydrophobes deviennent plus puissantes par rapport aux fonctions hydrophiles. Cela entraine une transition du matériau de soluble dans l'eau à insoluble dans l'eau. Quand la température dépasse la LCST, les chaines 310 de polymère se recroquevillent et précipitent, ce qui trouble la solution qui devient laiteuse. Une telle transition est illustrée de manière schématique par la figure 3. La LCST est dépendante notamment de la longueur des chaines. Pour une longueur de chaine donnée, la plage de température de transition est resserrée. En intégrant en phase de synthèse des comonomères plus hydrophiles, il est possible de faire augmenter la LCST du polymère pour des utilisations à plus haute température. Par exemple de l'acrylamide permet d'augmenter la LCST en vue d'utilisations dans un capteur solaire thermique fonctionnant à des plus hautes températures.

Le contrôle de la LCST peut également s'effectuer en ajoutant en solution des surfactants comme par exemple le dodécylsulfate de sodium (SDS) en concentration inférieur à 1%. Le réglage de la LCST peut également se faire en variant le pH de la solution, un pH plus élevé permettant de faire diminuer la LCST tandis qu'un pH plus faible permettant d'augmenter la LCST. On utilise par exemple du NaOH pour augmenter le pH et par exemple du HCl pour diminuer le pH.

Un vitrage 10 doté d'une telle couche 103 thermotrope, peut permettre de protéger un capteur solaire sur lequel ce vitrage est intégré de conditions météos extrêmes et en particulier de températures importantes. Il s'agit de préserver en particulier l'absorbeur et le système fluidique et de maintenir ce système de sorte qu'un fluide dans ce système ne dépasse pas une température seuil. Par exemple, la température seuil peut être de l'ordre de 150°C et de préférence inférieure à 100°C lorsque le fluide est de l'eau. Un exemple de conditions météo extrêmes est une température extérieure de 45°C, un vent de 1 m/s en convection naturelle, une densité surfacique de puissance de 1000 W/m².

Pour permettre d'assurer une fonction de protection dans la plupart des conditions météos auxquelles le capteur solaire thermique plan est susceptible d'être soumis, la couche 103 est de préférence choisie, en termes d'épaisseur et de matériau thermosensible la composant, de sorte à avoir une température critique inférieure de solution (LCST) comprise entre 30°C et 75°C, avantageusement entre 45°C et 75°C et de préférence entre 50°C et 70°C, par exemple de l'ordre de 60°C. La couche 103 est également choisie de sorte que le vitrage 10 ait une transmittance maximale de 50% à une température supérieure à cette température LCST, notamment pour des applications du capteur à haute température telles qu'un process industriel et de préférence une transmittance maximale de 25% pour des applications plus courantes, notamment dans le domaine du bâtiment.

Avantageusement, la couche 103 est choisie de sorte à avoir une transmittance en dessous de la LCST d'au minimum 85%.

En réalisant par exemple un vitrage thermotrope avec deux couches 101, 105 de verre de dimensions dans le plan de 50mm^{∗}50mm et d'épaisseur de 1.1mm, séparées par une couche 103 liquide de l'ordre de 140 µm d'épaisseur formée d'une solution de 5% de PNIPAm, une transmittance solaire maximale de 89% et une transmittance solaire minimale de 50% peuvent être obtenues.

La température LCST de la couche 103 thermotrope peut être de l'ordre de 30°C. Si une telle couche 103 est intégrée sur un capteur solaire thermique plan, une température de stagnation limitée à 150°C peut être obtenue pour des conditions météo par exemple de 1000 W/m² de flux, de 45°C de température extérieure et de 1m/s de vent. Une réduction de température de plus de 80°C par rapport à une vitre classique en verre ou en polycarbonate de même épaisseur.

Selon un mode de réalisation particulier, la deuxième couche transparente 105 du vitrage 10 peut être réalisée en un matériau, en particulier polymère permettant de lui conférer une souplesse afin de pouvoir absorber d'éventuelles variations de volume de la couche thermotrope par dilation thermique ou du fait du gel. Le matériau polymère de la deuxième couche transparente 105 est dans ce cas choisi de sorte à avoir un indice proche du verre, et de sorte à être peu absorbant typiquement entre 3 et 5 % dans le spectre solaire. Par exemple on peut prévoir la couche transparente 105 à base de verre ou de polycarbonate, ou de PCTFE (i.e. polychlorotrifluoroéthylène). Une couche transparente 105 en polymère permet également de rendre le vitrage moins lourd et moins couteux que lorsqu'elle est prévue en verre.

Sur la figure 4 on a représenté, selon une vue en coupe, un exemple de capteur solaire 2 thermique plan doté d'un vitrage 10 tel que décrit précédemment. Le capteur solaire 2 thermique permet de collecter l'énergie solaire lumineuse et de la convertir en chaleur. Le vitrage 10 forme une face avant plane du capteur solaire 2. De plus, le capteur solaire 2 comporte un caisson 50 formant la face arrière du capteur solaire 2. Ce caisson 50 est creux et définit un volume interne qui est refermé par le biais du vitrage 10 transparent. Une région 51 de ce volume interne qui s'étend sous un système fluidique 40 peut être remplie d'un matériau isolant, par exemple une mousse de polyuréthane, laine de roche. De plus, le capteur solaire 2 comporte un absorbeur 30, qui est situé dans le volume interne du caisson 50, une cavité 52 remplie d'air étant typiquement prévue entre l'absorbeur 30 et le vitrage 10 plan. Cette cavité 52 peut avoir une hauteur h typiquement de plusieurs centimètres. L'absorbeur 30 se présente typiquement sous forme d'une plaque, qui peut être métallique. L'absorbeur 30 intercepte un flux solaire F ayant traversé le vitrage 10 et l'absorbe. Pour optimiser ses performances, l'absorbeur 30 est typiquement pourvu d'un revêtement pour maximiser l'absorption dans les longueurs d'onde correspondant au spectre solaire (250-2500nm) et pour minimiser l'émission dans le rayonnement infrarouge (IR) lointain. Le capteur solaire 2 comprend également un système fluidique 40 doté d'au moins un tube 41 collecteur, situé dans le volume interne du caisson 50 de sorte que l'absorbeur 30 est agencé entre le vitrage 10 formant la face avant du capteur solaire 2 et le tube collecteur 41. Ce tube collecteur 41 comprend un fluide caloporteur 42 destiné à être réchauffé par le rayonnement solaire et qui circule au travers du tube collecteur 41. Le tube collecteur 41 est ici représenté avec une section circulaire, mais d'autres types de sections peuvent être utilisées, notamment rectangulaire. Le fluide caloporteur 42 circule dans le tube collecteur 41, refroidit l'absorbeur 30 et accumule de la chaleur durant son parcours. Ce fluide caloporteur 42 peut être de l'eau ou un mélange d'eau et de glycol pour la protection contre le gel. Dans certaines applications, le fluide peut être de l'air ou une huile.

En stagnation, une transmittance maximale au-dessus de la LCST de 25% garantie que la température du fluide ne dépasse pas 100°C dans les conditions météo extrêmes (1000 W/m², 45°C de température extérieure, 1 m/s de vent en convection naturelle).

En circulation, le vitrage reste de préférence au-dessus de 85% de transmittance pour garantir une efficacité acceptable au capteur jusqu'à 80°C de température d'entrée du fluide.

Un exemple de procédé de fabrication d'un vitrage tel que décrit précédemment en lien avec la figure 1 va à présent être donné, dans le cas particulier d'une couche thermotrope 103 liquide.

Pour réaliser une solution liquide thermotrope, on prévoit un polymère thermosensible tel que du PNIPAm, par exemple sous forme d'une poudre que l'on dissout dans un solvant, typiquement de l'eau, de préférence déminéralisée, selon une concentration visée. La LCST associée au polymère thermosensible est dépendante notamment de la longueur des chaines de ce polymère. Par ailleurs, en intégrant des comonomères plus hydrophiles ou plus hydrophobes, il est possible de faire respectivement augmenter ou diminuer la LCST du polymère.

On peut également adapter la LCST du polymère thermosensible choisi en faisant varier le pH. En ajoutant à la solution un élément permettant d'augmenter le pH, on peut faire diminuer la LCST, tandis qu'en ajoutant à la solution un élément permettant de faire diminuer le pH on peut augmenter la LCST.

Pour former le réceptacle de la solution liquide, on maintient en regard l'une de l'autre et à distance une première couche transparente 101 avec une deuxième couche transparente 105 par exemple toutes les deux en verre et on réalise au moins une paroi 151 périphérique de fermeture reliant ces deux couches transparentes 101, 105.

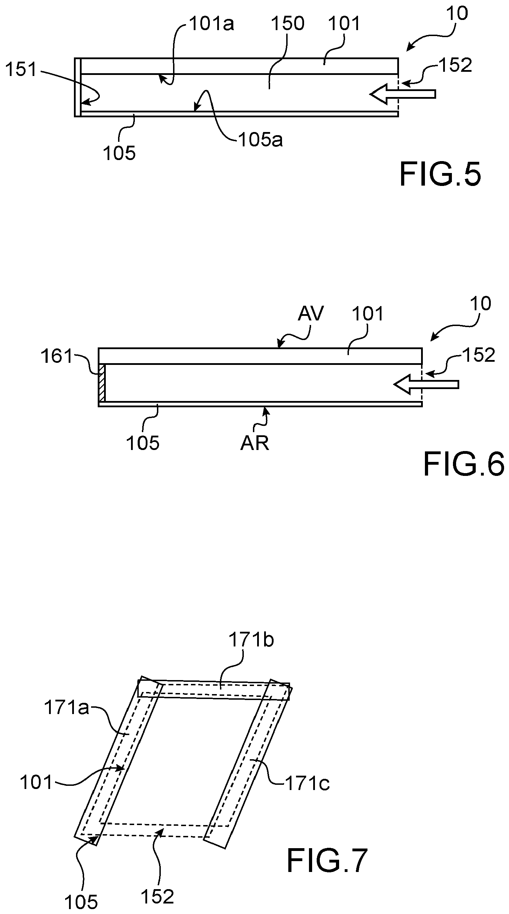

Cette paroi périphérique 151 de fermeture est formée de plusieurs faces réalisant un angle non nul et avec les couches transparentes 101, 105. On forme ainsi un réceptacle et on délimite ainsi une enceinte 150 partiellement fermée entre des faces internes 101a, 105a des couches 101, 105 situées en regard l'une de l'autre et la paroi 151 périphérique de fermeture. Cette enceinte 150 est fermée à l'exception d'une ouverture périphérique 152 d'accès (figure 5).

Une manière particulière de réaliser cette paroi périphérique 151 de fermeture est illustrée sur la figure 6 et consiste à utiliser des cales 161 agencées entre les couches transparentes 101, 105 pour maintenir ces couches à distance l'une de l'autre. Puis, on vient combler des interstices entre les couches transparentes 101, 105, et situés en périphérie de l'ensemble au moyen d'un cordon de colle (non représenté), par exemple sous forme liquide. Là encore, on préserve une ouverture périphérique 152 pour permettre le remplissage du volume interne entre les couches transparentes 101, 105.

Une autre manière de réaliser cette paroi périphérique de fermeture illustrée de manière schématique sur la figure 7 est d'utiliser un élément adhésif, en particulier sous forme d'une ou plusieurs bandes 171a, 171b, 171c pour lier entre eux des bords latéraux des couches transparentes 101, 105 (représentées en trait discontinu) et former un contour adhésif entourant partiellement l'ensemble des couches de manière à préserver une ouverture latérale. On choisit un adhésif qui soit compatible avec le polymère thermosensible et ne vienne altérer ses propriétés et dont les propriétés adhésives ne soient pas altérées par la solution liquide.

La paroi périphérique de fermeture peut être répartie par exemple sur 90% du pourtour des deux couches 101, 105.

Une fois le vitrage à couche thermotrope réalisé, on peut l'assembler sur un caisson afin de réaliser un capteur solaire thermique plan.

## Revendications

1. Capteur solaire (2) thermique doté d'un vitrage (10) transparent en face avant du capteur, le vitrage (10) étant formé d'une superposition :
- d'une première couche (101) transparente,
- d'une deuxième couche (105) transparente,
- d'une couche (103) thermotrope agencée entre la première couche (101) transparente et la deuxième couche (105) transparente et ayant une transmittance modulable du spectre visible et proche infrarouge,
la couche (103) thermotrope contenant un polymère thermosensible tel qu'un d'hydrogel, en particulier de poly(N-isopropylacrylamide (PNIPAm), le polymère thermosensible ayant une température critique inférieure de transition (LCST) donnée comprise entre 30°C et 110°C, avantageusement entre 30°C et 75°C, de préférence entre 50°C et 70°C, et prévu de sorte que la couche thermotrope ait une transmittance maximale de 50% pour une température supérieure à cette température critique inférieure de transition (LCST) donnée.

2. Capteur solaire (2) thermique selon la revendication 1, ladite couche thermotrope (103) étant sous forme d'une solution liquide, en particulier une solution aqueuse.

3. Capteur solaire thermique selon l'une des revendications 1 ou 2, la première couche (101) transparente ayant une première épaisseur (e₁), la deuxième couche (105) transparente ayant une deuxième épaisseur (e₂) inférieure à la première épaisseur.

4. Capteur solaire thermique selon l'une des revendications 1 à 3, la solution liquide comportant un additif antigel tel que du glycérol, du méthanol.

5. Capteur solaire thermique selon l'une des revendications 1 à 4, dans lequel la deuxième couche (105) transparente est en matériau polymère.

6. Capteur solaire thermique (1) selon l'une des revendications 1 à 5, comportant en outre :
- un absorbeur (4), situé au moins en partie dans un volume interne refermé par le biais d'au moins une partie dudit vitrage, l'absorbeur étant configuré pour absorber le rayonnement solaire et le transformer en chaleur,
- au moins un tube collecteur (5), situé dans le volume interne () de sorte que l'absorbeur (4) se trouve entre ledit vitrage du capteur solaire (1) et le tube collecteur (5), pour accueillir un fluide caloporteur (F) destiné à être réchauffé par le rayonnement solaire.

7. Capteur solaire thermique (1) selon l'une des revendications 1 à 6, la couche (103) thermotrope contenant un polymère thermosensible tel qu'un d'hydrogel, de poly(N-isopropylacrylamide (PNIPAm), le polymère thermosensible ayant une température critique inférieure de transition (LCST) entre 30°C et 75°C, de préférence entre 50°C et 70°C, et prévu de sorte que la couche thermotrope ait une transmittance maximale de 25% pour une température supérieure à cette température critique inférieure de transition (LCST) donnée.

8. Procédé de fabrication d'un capteur solaire (2) thermique selon l'une des revendications précédentes comprenant la réalisation d'un vitrage (10) transparent, cette réalisation comportant des étapes consistant à :
a) disposer la première couche (101) transparente et la deuxième couche (105) transparente en regard l'une de l'autre,
b) réaliser une paroi de fermeture périphérique (151, 161, 171a, 171b, 171c) entre la première transparente et la deuxième couche transparente de sorte à définir une enceinte fermée et préserver une ouverture latérale (152) entre la première couche transparente (101) et la deuxième couche transparente (105) d'accès à cette enceinte,
c) remplir à travers l'ouverture latérale (152) l'enceinte d'une solution liquide à base d'un polymère thermosensible tel qu'un d'hydrogel de poly(N-isopropylacrylamide (PNIPAm),
d) fermer l'ouverture latérale (152) de l'enceinte.

9. Procédé selon la revendication 8, dans lequel l'étape b), comprend l'agencement d'une ou plusieurs cales (161) entre la première couche (101) transparente et la deuxième couche transparente (105), puis le dépôt d'une colle autour des cales et dans des espaces entre la première couche (101) transparente et la deuxième couche transparente (105).

10. Procédé selon la revendication 8, dans lequel l'étape b) comprend le dépôt d'un élément adhésif sous forme d'une ou plusieurs bandes (71a, 71b, 71c) liant des bords latéraux de la première couche (101) transparente et de la deuxième couche transparente (105).
